# EUROPEAN PATENT APPLICATION

(11) **EP 0 860 309 A2**
(43) Date of publication of application: **26.08.1998**
(21) Application number: 98102558.8
(22) Date of filing: 13.02.1998
(51) Int. Cl.: B60H 1/32, F25B 9/00

(54) **Carbon dioxide gas refrigeration cycle**

(30) Priority: 24.02.1997 JP 54261/97
(71) Applicant: ZEXEL CORPORATION, Tokyo (JP)
(72) Inventor: Kanai, Hiroshi, c/o Zexel Corporation, Higashi-Matsuyama City, Saitama-Pref. (JP); Furuya, Shunichi, c/o Zexel Corporation, Higashi-Matsuyama City, Saitama-Pref. (JP)
(74) Representative: Grünecker, Kinkeldey, Stockmair & Schwanhäusser Anwaltssozietät

(57) **Abstract**

Object

To provide a carbon dioxide gas refrigeration cycle using carbon dioxide gas as the coolant, wherein at such time as the main body of the cycle 2 shuts down, particularly under conditions of high temperature, it is possible to inhibit increases in internal pressure, and wherein when using a buffer tank 11 to inhibit increases in internal pressure at such time as the main body of the cycle 2 shuts down, it is possible to avoid excessive size of said buffer tank 11 and to lessen the amount of coolant required to fill it.

Solution

A carbon dioxide gas refrigeration cycle wherein a compressor 4 circulates a coolant within the main body of the cycle 2, carbon dioxide gas being used as this coolant, wherein it has a buffer tank 11, which is separate from the main body of the cycle 2 and capable of containing the carbon dioxide gas, this buffer tank 11 being capable of coupling to the main body of the cycle 2 at such time as the compressor 4 shuts down.

## Description

### BACKGROUND TO THE INVENTION

### 1. Field of the Invention

The present invention relates to a carbon dioxide gas refrigeration cycle, and in particular to a carbon dioxide gas refrigeration cycle using carbon dioxide gas as a coolant wherein it is possible to control the internal pressure when the cycle shuts down.

### 2. Description of the Related Art

Freon, which has hitherto been used as a coolant in refrigeration cycles, is now known to present a problem in that it is detrimental to the ozone layer, and research is currently being conducted into the possibility of replacing it with carbon dioxide gas, which presents no such problem. An example of this is to be seen in Japanese Patent H7[1995]-294033.

However, carbon dioxide gas has different properties of contraction and expansion from those of freon, and in order for it to be used as a coolant, the refrigeration cycle needs to run at a higher pressure and higher temperature.

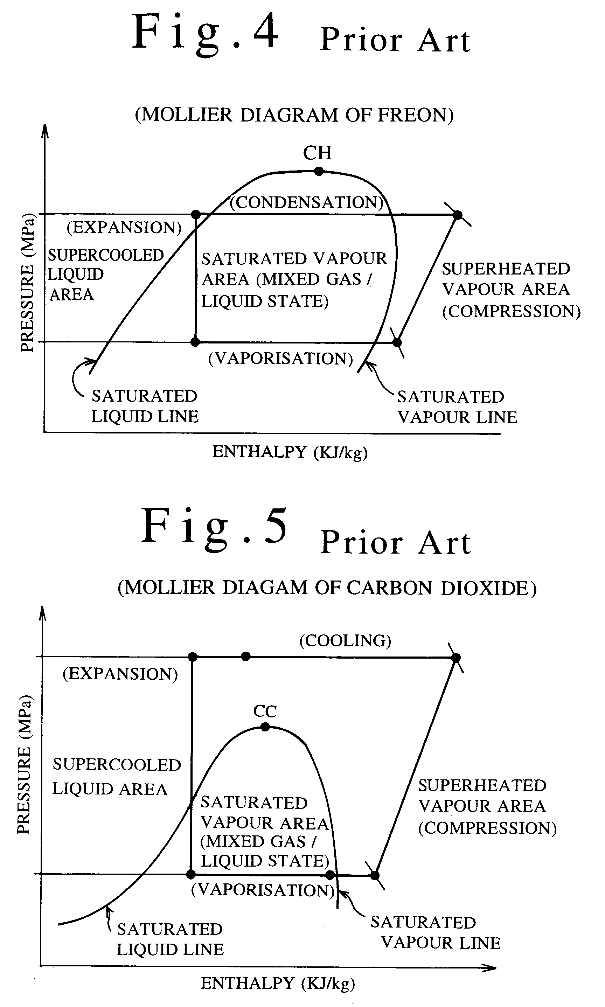

There follows an explanation based on Figs. 4 and 5.

Fig. 4 is a Mollier diagram of the conventional freon. The line of the refrigeration cycle is seen to intersect with the saturated liquid and saturated vapour lines on the low-pressure side of the gas / liquid critical point CH, where these two themselves intersect.

In other words, the progress from the saturated vapour area (mixed gas / liquid state) to the superheated vapour area is implemented in the vaporisation (heat absorption) process, while that from the saturated vapour area to the supercooled liquid area is implemented in the condensation (heat release, cooling) process.

Fig. 5 is a Mollier diagram of carbon dioxide. It will be seen that the line which represents the cooling process in the refrigeration cycle is located on the high-pressure side of the gas / liquid critical point CC, and the saturated liquid and saturated vapour lines do not intersect it anywhere.

In other words, the progress from the saturated vapour area (mixed gas / liquid state) to the superheated vapour area is implemented in the vaporisation (heat absorption) process in the same manner as with freon, but there is no condensation process in the area beyond the critical point CC, and unlike freon the cooling (heat release) process is implemented without the carbon dioxide gas liquefying.

Consequently, in a cooling cycle in which carbon dioxide gas is used as a coolant, the pressure within the cycle in the area beyond this critical point CC is determined by the temperature and by the mass of the coolant, resulting in problems of greatly increased internal pressure if the cycle shuts down at a high temperature.

Failure to take steps to solve this problem means that since, for example, at an outside air temperature of 60°C the pressure within the cooling cycle can easily reach 10 MPa, the piping system throughout the cooling cycle must be designed to resist high pressure.

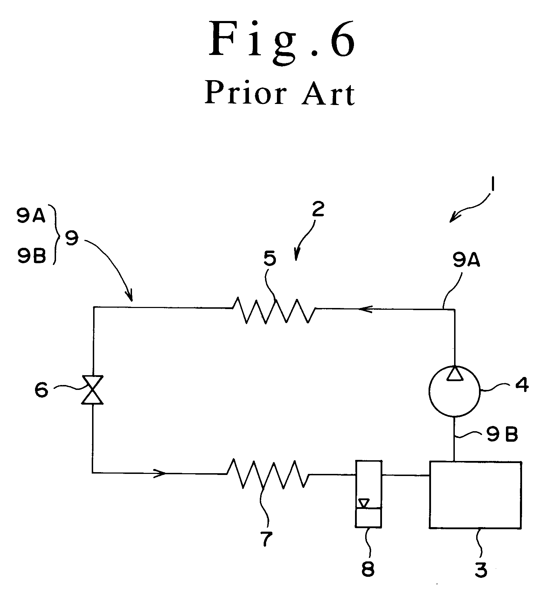

A conceivable method of preventing the internal pressure in the cooling cycle from increasing excessively at high temperatures is to provide a buffer tank capable of containing a specified volume of carbon dioxide gas, as in Fig. 6.

In other words, Fig. 6 is an outline explanatory diagram illustrating a carbon dioxide gas refrigeration cycle 1, which has a main body of the cycle 2 and a buffer tank 3.

The main body of the cycle 2 has a compressor 4, a condenser 5 (or gas cooler), an expansion valve 6, a volatiliser 7, a gas / liquid separator 8, and cycle piping 9 (high-pressure cycle piping 9A and low-pressure cycle piping 9B) which connect these.

The buffer tank 3 is located on the low-pressure side within the main body of the cycle 2, namely on the low-pressure piping 9B between the compressor 4 and the gas / liquid separator 8.

The fact that in the carbon dioxide gas refrigeration cycle 1 of this configuration the buffer tank 3 has a prescribed capacity makes it possible for the carbon dioxide gas for the main body of the cycle 2 to be kept within the buffer tank 3 when the main body of the cycle 2 shuts down (ie when the compressor 4 shuts down), and for the internal pressure within the main body of the cycle 2 to inhibit increases in pressure.

However, inasmuch as the buffer tank 3 is always filled with the carbon dioxide gas coolant, it must have a capacity of at least 4 litres in order to maintain its internal pressure at about 7 MPa when the external air temperature is 60°C. This leads to the practical problem of the resultant increase in overall size of the carbon dioxide gas refrigeration cycle 1, particularly if it is to be adopted for vehicular use.

### SUMMARY OF THE INVENTION

It is an object of the present invention, which has been implemented with a view to presenting a solution to the above problems, to provide a carbon dioxide gas refrigeration cycle using carbon dioxide gas as the coolant, wherein at such time as the main body of the cycle shuts down, particularly under conditions of high temperature, it is possible to inhibit increases in internal pressure.

It is a further object of the present invention to provide a carbon dioxide gas refrigeration cycle wherein at such time as the main body of the cycle shuts down it is possible to control the internal pressure to a specified level.

It is yet a further object of the present invention to provide a carbon dioxide gas refrigeration cycle wherein when using a buffer tank to inhibit increases in internal pressure at such time as the main body of the cycle shuts down, it is possible to avoid excessive size of this buffer tank and to lessen the amount of coolant required to fill it.

That is to say, the present invention is marked by the fact that during shut-down the buffer tank couples to the main body of the cycle, being a carbon dioxide gas refrigeration cycle wherein a compressor circulates a coolant within the main body of the cycle, carbon dioxide gas being used as this coolant, characterised in that it has a buffer tank, which is separate from the said main body of the cycle and capable of containing the said carbon dioxide gas, this buffer tank being capable of coupling to the said main body of the cycle only at such time as the said compressor shuts down.

It is possible to locate an on / off valve between the main body of the cycle and the buffer tank in order to regulate the connection between them.

It is possible to incorporate the buffer tank and a gas / liquid separator located within the main body of the cycle into a single body.

It is possible to choose the cycle piping of the main body of the cycle (high-pressure piping or low-pressure piping) at will as a site for connecting the buffer tank to the main body of the cycle, but it should preferably be close to the inlet on the low-pressure side of the compressor.

The carbon dioxide gas refrigeration cycle to which the present invention pertains allows the buffer tank to be coupled to the main body of the cycle only at such times as it or the compressor shut down. This means that the carbon dioxide in the main body of the cycle can then be fed into the buffer tank, thus reducing the pressure within the main body of the cycle. In particular, it makes it possible to avoid high internal pressure within the main body of the cycle when the external air temperature is high.

Moreover, by opening the buffer tank side up only during shut-down, it is possible to reduce the tank capacity by approximately half in comparison with the case illustrated in Fig. 6 where the buffer tank is connected directly to the main body of the cycle.

For instance, if the buffer tank is filled with carbon dioxide gas at very low pressure (1 MPa or less), its capacity need not be more than about 2 litres.

Thus it is possible to reduce the amount of coolant with which the buffer tank is filled, making the whole structure more compact and suitable for practical use.

Once the cycle begins to operate again, the buffer tank may be re-coupled to the main body of the cycle, and the carbon dioxide gas fed back.

### BRIEF DESCRIPTION OF THE DRAWINGS

Fig. 1 is an outline explanatory diagram illustrating the carbon dioxide gas refrigeration cycle 10 according to the first embodiment of the present invention;
Fig. 2 is an outline explanatory diagram illustrating the carbon dioxide gas refrigeration cycle 20 according to the second embodiment of the present invention;
Fig. 3 is an outline explanatory diagram illustrating the carbon dioxide gas refrigeration cycle 30 according to the third embodiment of the present invention;
Fig. 4 is a Mollier diagram of the conventional freon;
Fig. 5 is a Mollier diagram of carbon dioxide; and
Fig. 6 is an outline explanatory diagram illustrating the carbon dioxide gas refrigeration cycle 1.

### DESCRIPTION OF THE PREFERRED EMBODIMENTS

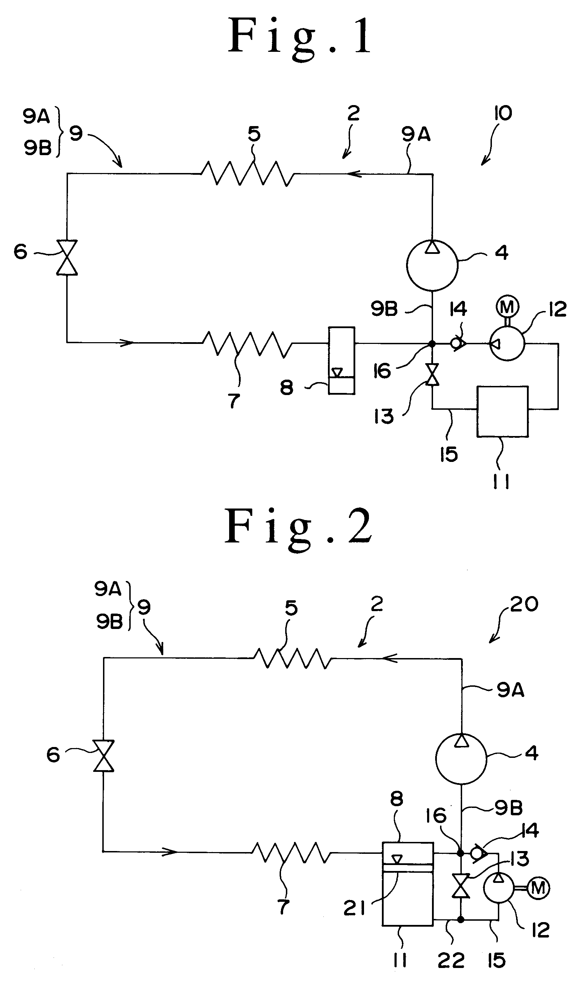

There now follows, with the aid of Fig. 1, a description of a carbon dioxide gas refrigeration cycle 10 to which the first embodiment of the present invention pertains. Those parts which are the same as in Figs. 4 and 6 have been allocated the same codes, and a detailed explanation of these has been omitted.

Fig. 1 is an outline explanatory diagram illustrating the carbon dioxide gas refrigeration cycle 10. This carbon dioxide gas refrigeration cycle 10 has a main body of the cycle 2, a butter tank 11 which is separate fro the main body of the cycle 2, a tank compressor 12, an on / off valve 13, a one-way valve 14, and loop-shaped tank piping 15.

The cycle piping 9 (low-pressure piping 9B) and the tank piping 15 are joined at a junction point 16.

The buffer tank 11 is filled with carbon dioxide gas at a lower pressure (eg 1 MPa) than the internal pressure of the main body of the cycle 2.

It is preferable that this buffer tank 11 be located where the temperature is lowest, and the conditions for its location are the same as those for the gas / liquid separator 8, which is located in the low-pressure piping 9B.

However, the conditions for locating the buffer tank 11 differ from those of the gas / liquid separator 8 in that either the high-pressure piping 9A or the low-pressure piping 9B of the cycle piping 9 will do.

In the carbon dioxide gas refrigeration cycle 10 of this configuration it is possible, by releasing the on / off valve 13 at such time as the carbon dioxide gas refrigeration cycle 10 shuts down, to feed the carbon dioxide gas which is within the main body of the cycle 2 into the buffer tank 11 until a pressure equilibrium is attained between the main body of the cycle 2 into the buffer tank 11, thus allowing the internal pressure within the main body of the cycle 2 to be reduced to a prescribed level.

As a result, it is possible to avoid increased pressure within the main body of the cycle 2 under conditions of high temperature, rendering it unnecessary for the low-pressure piping 9b to be capable of resisting high pressure.

When the main body of the cycle 2 starts up again, the on / off valve 13 may be closed and the tank compressor 12 operated so as to feed carbon dioxide gas to the main body of the cycle 2 until the internal pressure within the buffer tank 11 attains the 1 MPa level (a few seconds).

Thus, coolant which has been released into the buffer tank 11 is returned to the main body of the cycle 2 when it starts up again. As means of achieving this, it is possible to conceive a mechanism whereby a spring or similar device (not illustrated in the drawings) is provided within the buffer tank 11, the coolant being returned to the main body of the cycle 2 by virtue of the force accumulated by this spring.

However, the spring constant and amplitude required in any such mechanism would mean that the spring would be very large, and it is not practical for use in a vehicular carbon dioxide gas refrigeration cycle in particular.

It should be added that there is no need to release carbon dioxide gas into the buffer tank 11 when the cycle shuts down in conditions of low external air temperature.

Fig. 2 is an outline explanatory diagram illustrating the carbon dioxide gas refrigeration cycle 20 according to the second embodiment of the present invention. In this carbon dioxide gas refrigeration cycle 20, the buffer tank 11 and the gas / liquid separator 8 are incorporated into a single body divided by a partition 21.

Furthermore, the loop-shaped tank piping 15 and the buffer tank 11 are coupled by means of branch piping 22.

In the carbon dioxide gas refrigeration cycle 20 of this configuration, as has already been mentioned, the conditions for locating the buffer tank 11 are the same as those of the gas / liquid separator 8, and by incorporating them into a single body it is possible to make effective use of the available space.

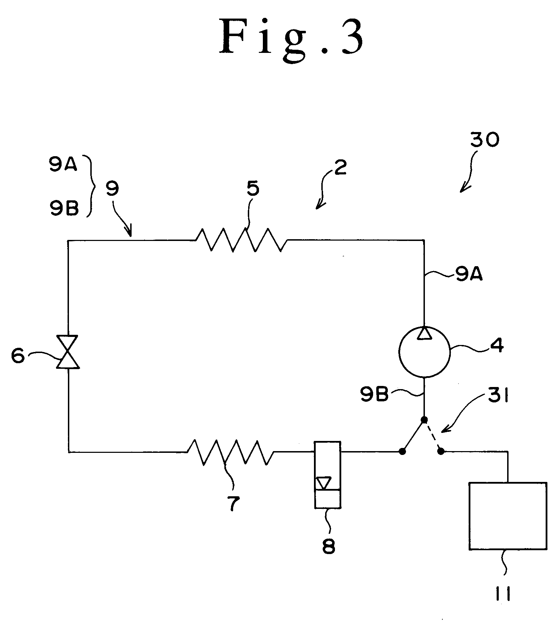

Fig. 3 is an outline explanatory diagram illustrating the carbon dioxide gas refrigeration cycle 30 according to the third embodiment of the present invention. In the carbon dioxide gas refrigeration cycle 30, instead of having a tank compressor 12 for the express use of the buffer tank 11, the compressor 4 in the main body of the cycle 2 doubles for use with it.

In other words, the carbon dioxide gas refrigeration cycle 30 has a main body of the cycle 2, a buffer tank 11 and a circuit switch valve 31.

The circuit switch valve 31 makes it possible to alter the state of coupling of the main body of the cycle 2 and the buffer tank 11 to be switched from outside the main body of the cycle 2, thus allowing the buffer tank 11 to be detached from the main body of the cycle 2 while it is running, and coupled to the cycle piping 9 (eg low-pressure piping 9B) of the main body of the cycle 2 when it shuts down.

The circuit switch valve 31 is preferably located in the vicinity of the inlet of the compressor 4.

In the carbon dioxide gas refrigeration cycle 30 of this configuration, the circuit switch valve 31 allows the compressor 4 and the gas / liquid separator 8 to be coupled while the main body of the cycle 2 is running (unbroken line in the drawing), the internal pressure within the buffer tank 11 being for instance 1 MPa.

When the circuit shuts down, the circuit switch valve 31 allows the compressor 4 and the buffer tank 11 to be coupled (broken line in the drawing), releasing the coolant within the main body of the cycle 2 into the buffer tank 11.

It may also be contrived in such a manner that the gas / liquid separator 8 is coupled to the buffer tank 11.

When the main body of the cycle 2 starts up again, the compressor 4 is operated, while still coupled to the buffer tank 11 by way of the circuit switch valve 31, until the internal pressure within the buffer tank 11 attains the 1 MPa level (a few seconds). Meanwhile, the circuit switch valve 31 is operated to allow the buffer tank 4 to be coupled to the gas / liquid separator 8. The buffer tank 11 and the main body of the cycle 2 are detached from each other, and the main body of the cycle 2 starts to operate.

Thus, as in the case of the carbon dioxide gas refrigeration cycle 10 (Fig. 1) or the carbon dioxide gas refrigeration cycle 20 (Fig. 2), the mechanism is such that the carbon dioxide gas is returned the main body of the cycle 2 when this starts up again. This is achieved without providing a compressor tank 12 expressly for use with the buffer tank 11 and separate from the compressor 4. Instead of this, the compressor 4 doubles for use with both the main body of the cycle 2 and the buffer tank 11. This not only makes it possible to eliminate the need for a motor for use with the tank compressor 12, but also to dispense with the on / off valve 13 and the one-way valve 14, thus greatly simplifying the configuration and control of the whole of the carbon dioxide gas refrigeration cycle 30.

Furthermore, the circuit switch valve 31 can be adopted also where the gas / liquid separator 8 and buffer tank 11 are incorporated into a single body as in the carbon dioxide gas refrigeration cycle 20 (Fig. 2).

### Effect of the invention

The above invention makes it possible to couple the separate buffer tank to the main body of the cycle when this shuts down, as a result of which the buffer tank does not require to have a very large capacity, and it is possible to implement a carbon dioxide gas refrigeration cycle without any risk of increased pressure particularly at the time of shut-down.

### Reference Terms

- 1: Carbon dioxide gas refrigeration cycle (Fig. 6)
- 2: Main body of the cycle
- 3: Buffer tank
- 4: Compressor
- 5: Condenser (or gas cooler)
- 6: Expansion valve
- 7: Volatiliser
- 8: Gas / liquid separator
- 9: Cycle piping
- 9A: High-pressure cycle piping
- 9B: Low-pressure cycle piping
- 10: Carbon dioxide gas refrigeration cycle (First embodiment, Fig. 1)
- 11: Buffer tank
- 12: Tank compressor
- 13: On / off valve
- 14: One-way valve
- 15: Loop-shaped tank piping
- 16: Junction point
- 20: Carbon dioxide gas refrigeration cycle (Second embodiment, Fig. 2)
- 21: Partition
- 22: Branch piping
- 30: Carbon dioxide gas refrigeration cycle (Third embodiment, Fig. 3)
- 31: Circuit switch valve
- CH: Gas / liquid critical point in Mollier diagram of freon (Fig. 4)
- CC: Gas / liquid critical point in Mollier diagram of carbon dioxide (Fig. 5)

## Claims

1. A carbon dioxide gas refrigeration cycle wherein a compressor 4 circulates a coolant within the main body of the cycle 2, carbon dioxide gas being used as said coolant, comprising:
a buffer tank 11, which is separate from said main body of the cycle 2 and capable of containing said carbon dioxide gas; and
said buffer tank 11 being capable of coupling to said main body of the cycle 2 only at such time as said compressor 4 shuts down. (Fig. 1, Fig. 2, Fig. 3)

2. The carbon dioxide gas refrigeration cycle according to Claim 1, wherein the connection site of said buffer tank 11 to said main body of the cycle 2 (connection point 16) is in the vicinity of the inlet on the low-pressure side of said compressor 4. (Fig. 1, Fig. 2, Fig. 3)

3. The carbon dioxide gas refrigeration cycle according to Claim 1, wherein said buffer tank 11 is filled with that portion of said carbon dioxide gas which is at a lower pressure than the internal pressure of said main body of the cycle 2. (Fig. 1, Fig. 2, Fig. 3)

4. The carbon dioxide gas refrigeration cycle according to Claim 1, wherein said buffer tank 11 is located in a position where the temperature within said main body of the cycle 2 is at its lowest. (Fig. 1, Fig. 2, Fig. 3)

5. The carbon dioxide gas refrigeration cycle according to Claim 1, wherein there is an on / off valve 13 located between said main body of the cycle 2 and said buffer tank 11. (Fig. 1, Fig. 2)

6. The carbon dioxide gas refrigeration cycle according to Claim 5, wherein said buffer tank 11 is located in loop-shaped tank piping 15; and said tank piping 15 is provided not only with said on / off valve 13, but also with a tank compressor 4 and a one-way valve 14. (Fig. 2)

7. The carbon dioxide gas refrigeration cycle according to Claim 6, wherein said loop-shaped tank piping 15 is connected at a connection point 16 to said main body of the cycle 2. (Fig. 1, Fig. 2)

8. The carbon dioxide gas refrigeration cycle according to Claim 1, wherein said buffer tank 11 and a gas / liquid separator 8 located within said main body of the cycle 2 are incorporated into a single body. (Fig. 2)

9. The carbon dioxide gas refrigeration cycle according to Claim 8, wherein it has a partition 21 between said gas / liquid separator 8 and said buffer tank 11, and loop-shaped tank piping 15 separate from the cycle piping 9 of said main body of the cycle 2, and equipped with an on / off valve 13, tank compressor 4 and one-way valve 14, said tank piping 15 and said buffer tank 11 being coupled by means of branch piping 22. (Fig. 2)

10. The carbon dioxide gas refrigeration cycle according to Claim 1, wherein a circuit switch valve 31 is provided between said main body of the cycle 2 and said buffer tank 11. (Fig. 3)

11. The carbon dioxide gas refrigeration cycle according to Claim 10, wherein said compressor 4 in said main body of the cycle 2 doubles for use with said buffer tank 11. (Fig. 3)

12. The carbon dioxide gas refrigeration cycle according to Claim 10, wherein said circuit switch valve 31 is located in the vicinity of the inlet of said compressor 4. (Fig. 3)

13. The carbon dioxide gas refrigeration cycle according to Claim 10, wherein said circuit switch valve 31 serves to separate said main body of the cycle 2 and said buffer tank 11 when the main body of the cycle 2 is operating, and to couple said main body of the cycle 2 and said buffer tank 11 when the main body of the cycle 2 shuts down. (Fig. 3)
